# EUROPEAN PATENT APPLICATION

(11) **EP 1 341 102 A1**
(43) Date of publication of application: **03.09.2003**
(21) Application number: 01970286.9
(22) Date of filing: 28.09.2001
(51) Int. Cl.: G06F 17/60, H04N 7/16, G06F 13/00

(54) **SERVICE PROVIDING METHOD**

(30) Priority: 07.12.2000 JP 2000372359; 27.08.2001 JP 2001256709
(71) Applicant: Sony Computer Entertainment Inc., Tokyo 107-0052 (JP)
(72) Inventor: MAGOSHI, Hidetaka, Tokyo 107-0052 (JP)
(74) Representative: Görz, Ingo
(86) International application number: JP0108553
(87) International publication number: WO02046993

(57) **Abstract**

Setting fees of service beneficiaries according to the frequency (and or the quantity) of advertising to be added to services provided. With this arrangement, it is possible to provide services in the mode added with the fee and advertising that the service beneficiaries want.
(Fig. 1)

## Description

### TECHNICAL FIELD

The present invention relates to a method of providing services, a program for providing services, a computer-readable recording medium recorded a program for providing services, an apparatus for executing a program, a contents distribution system, a contents distribution program, and a computer-readable recording medium recorded a contents distribution program, that are suitable for application to toll viewer services of television broadcasting like ground wave broadcasting, satellite broadcasting, and cable televisions, connection services and contents distribution services for a communication line network like the Internet, and product distribution services.

### BACKGROUND ART

Nowadays, various kinds of television broadcasting like a ground wave broadcasting using a ground wave, a satellite broadcasting using a satellite and a cable broadcasting using cables are known. And various kinds of programs like sports, movies, news, etc. have been broadcast.

There are mainly two types of programs regarding the costs for broadcasting these programs and for making the programs. That is, programs whose costs are borne by the viewers and programs whose costs are borne by program sponsors . For example, in the case of national broadcasting, a fixed viewing fee is charged to each viewer every month. The national broadcasting station broadcasts programs and makes programs based on the fees collected from the viewers.

On the other hand, in the case of private broadcasting, program sponsors are invited. Commercial fees are charged to the sponsors on condition that the commercial of the sponsors is inserted while the programs are broadcast. A private broadcasting station broadcasts programs and makes programs based on the commercial fees collected from the sponsors. In the case of this private broadcasting, the sponsors pay the viewing fees for the viewers. Therefore, the viewers can watch the programs basically without paying the viewing fees.

However, in the case of the private broadcasting, while the viewers can watch programs free of charge as the sponsors pay for the commercial fees, the viewers are substantially forced to watch the commercial of the sponsors. When the frequency of commercial during a program is high, the flow of a series of the program is interrupted, and the viewers find difficulty in enjoying the program. Further, when the quantity of broadcasting commercial during a program becomes large, the program is interrupted for a long time. Therefore, the viewers also find difficulty in enjoying the program.

Under these circumstances, some viewers feel that they can pay viewing fee if the quantity of broadcasting commercial was to be decreased. On the other hand, it is also a fact that some viewers can accept the broadcasting of commercial if the viewing fees can be reduced or free of charge.

This kind of subject relating to the provision of services and the quantity of advertising similarly applies to a case of the contents that users observe via the communication line network like the Internet, for example, and banner advertising inserted (displayed) in the contents.

The present invention has been achieved in the light of the above problems. Therefore it has an object of providing a method of providing services, a program for providing services, a computer-readable recording medium recorded a program for providing services, an apparatus for executing a program, a contents distribution system, a contents distribution program, and a computer-readable recording medium recorded a contents distribution program, that are capable of providing services at fees and in an advertising mode selected by service beneficiaries.

### DISCLOSURE OF THE INVENTION

To solve the foregoing problems, the present invention sets a fee to be charged to service beneficiaries according to the frequency (and/or quantity) of advertising added to the services provided. With this arrangement, it is possible to provide services at the fee and in the advertising mode that the service beneficiaries want.

### BRIEF DESCRIPTION OF DRAWINGS

Fig. 1 is a block diagram of a contents distribution system according to an embodiment of the present invention.
Fig. 2 is a flowchart for explaining the operation of registering the frequency and the quantity of advertising in the contents distribution system according to the embodiment.
Fig. 3 is a diagram for explaining a charged fee corresponding to the frequency and the quantity of advertising.
Fig. 4 is a diagram for explaining user information stored in a user information database of a server system that constitutes the contents distribution system according to this embodiment.
Fig. 5 is a flowchart for explaining a distribution operation of contents and advertising information in the contents distribution system according to this embodiment.

### BEST MODE FOR CARRYING OUT THE INVENTION

The present invention can be applied to a contents distribution system for broadcasting various kinds of programs such as, for example, news programs, sports programs, and variety shows.

### Structure of the System

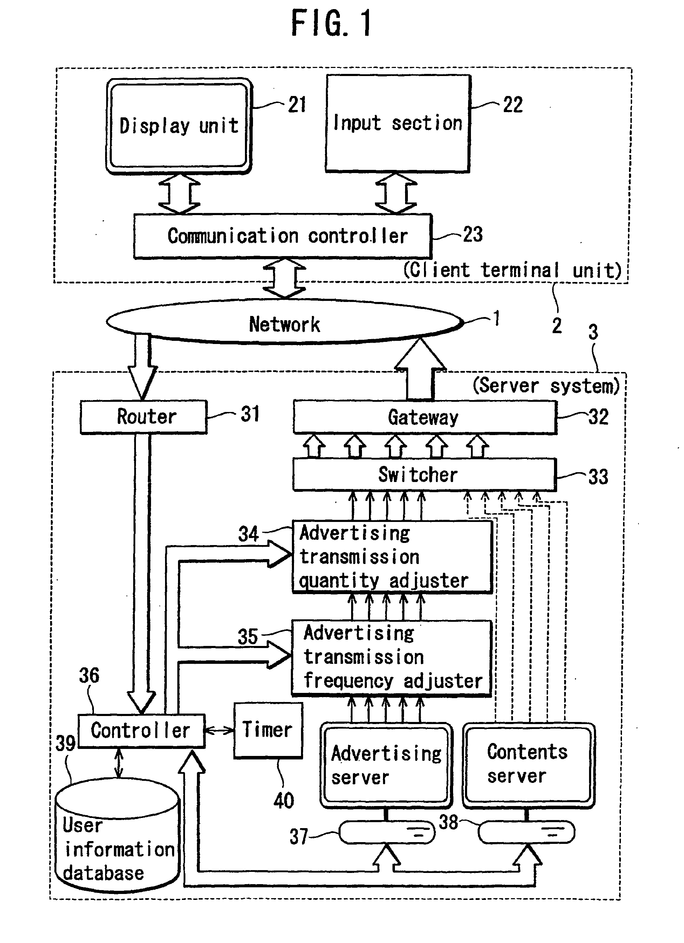

Fig. 1 is a block diagram of a contents distribution system according to an embodiment of the present invention. In Fig. 1, a contents distribution system of this embodiment has a client terminal unit 2 and a server system 3 at a broadcasting station side that transmits contents of various kinds of programs to this client terminal unit 2. The client terminal unit 2 and the server system 3 are connected to each other via a network 1.

The network 1 means a total communication network that utilizes an electric communications technique. This network 1 includes, for example, a communication line network like the Internet using the TCP (Transmission Control Protocol) / IP (Internet Protocol) as a base, a WAN (Wide Area Network) and a LAN (Local Area Network), and other networks like a television broadcasting network using a ground wave, a satellite communications network, and a cable communications network.

When the contents are distributed from the server system 3 to the broadcasting station side via the Internet, for example, the client terminal unit 2 becomes a personal computer having a Web browser and a contents processing function. When the contents are distributed using a ground wave from the server system 3, the client terminal unit 2 becomes a television image receiver.

In the following explanation, in order to facilitate the understanding, it is assumed that the client terminal unit 2 is a personal computer, and this client terminal unit 2 receives the distribution services of various kinds of contents that are distributed from the server system 3 at the broadcasting station side via the Internet as the network 1.

### Structure of the Server System

In this case, the server system 3 has a router 31, a gateway 32, a switcher 33, an advertising transmission quantity adjuster 34, an advertising transmission frequency adjuster 35, a controller 36, an advertising server 37, and a contents server 38.

The router 31 has a function of connecting the server system 3 to the client terminal unit 2 via the network 1. For example, it is possible to use an ISDN router corresponding to an ISDN (Integrated Services Digital Network) line, and a software router for realizing a router function with software. This router 31 can be replaced with the gateway 32 to be explained below.

The gateway 32 basically has a function of connecting the server system 3 to the client terminal unit 2 via the network 1 in a similar manner to that of the router 31. However, while the router 31 makes a mutual connection in a network layer (a third layer) of an OSI (Open Systems Interconnection) basic reference model, the gateway 32 can correspond to the protocols of all the layers of the OSI basic reference model. Therefore, by using the gateway 32, it becomes possible to realize a network connection processing for wider application.

The advertising server 37 stores advertising information like commercial, character advertising, and banner advertising. The contents server 38 stores program information (contents) like news programs, sports programs, and variety shows, for example. The advertising information and the contents are compressed and encoded according to the compressing and encoding technique like the MPEG2 (MPEG: Moving Picture Experts Group), and the compressed and encoded results are stored in the servers 37 and 38.

The advertising transmission quantity adjuster 34 thins the advertising information output from the advertising server 37 for a predetermined period of time according to an instruction from the controller 36, thereby to adjust the transmission quantity of the advertising information per time. This advertising information transmission quantity shows a transmission time of the advertising information.

The advertising transmission frequency adjuster 35 adjusts the transmission frequency of the advertising information output from the advertising server 37 according to an instruction from the controller 36. The frequency of the advertising information shows the number of advertising information transmitted per unit time.

The switcher 33 inserts the advertising information of the frequency and the quantity adjusted by the advertising transmission quantity adjuster 34 and the advertising transmission frequency adjuster 35 into the contents output from the contents server 38, or combines the advertising information with the contents. Then, the switcher 33 distributes this advertising information to the client terminal unit 2 via the gateway 32 and the network 1.

When the user does not want the distribution of this advertising (that is, when the user pays the viewing fee for the contents distribution services without advertising), the switcher 33 operates so as not to insert the advertising information into the contents from the contents server 38 or combine the advertising information with the contents.

The controller 36 has a user information database 39, and stores the frequency and the quantity of advertising assigned by each user, into this user information database 39. At the time of distributing the contents, the controller 36 reads each user information showing the frequency and the quantity of advertising assigned by the corresponding user, forms contents that are inserted or combined with the advertising information of the frequency and the quantity corresponding to this information, and distributes the resultant information to the client terminal unit 2. The controller 36 also performs timing processing with a timer 40, and monitors the time of distributing the advertising.

### Structure of the Client Terminal Unit

The client terminal unit 2 has a structure of a personal computer in this case. The client terminal unit 2 has a display unit 21 like a cathode ray tube (CRT) or a liquid crystal display (LCD) for displaying the contents (and the advertising information) distributed from the server system 3, a input section 22 like a keyboard and a mouse for assigning a selection of desired contents, and the transmission frequency and transmission quantity of the advertising information, and a communications controller 23 for carrying out the control of communication between the client terminal unit 2 and the server system 3.

### Operation of the Contents Distribution System

According to this embodiment, the contents distribution system selects the frequency and the quantity of advertising in advance when the viewer receives the contents of a desired program. At the broadcasting station side, the contents distribution system forms and distributes the contents inserted by the advertising of which frequency and the quantity are selected by the viewer. Then, the contents distribution system charges the viewer for the viewing fee corresponding to the frequency and the quantity of advertising added to the contents.

The explanation will be progressed below based on the assumption that each time when the viewer watches a program, the viewer selects the frequency and the quantity of advertising added to this program. This may be arranged as follows. The viewer assigns the desired frequency and quantity of advertising that the viewer wants, to the broadcasting station in advance. The broadcasting station adds the adverting of which the frequency and the quantity are assigned in advance by the viewer, and then distributes the contents of the program, without asking the viewer to assign the frequency and the quantity of advertising at the time of distributing the contents of the program.

### Registration of Frequency and Quantity of Advertising

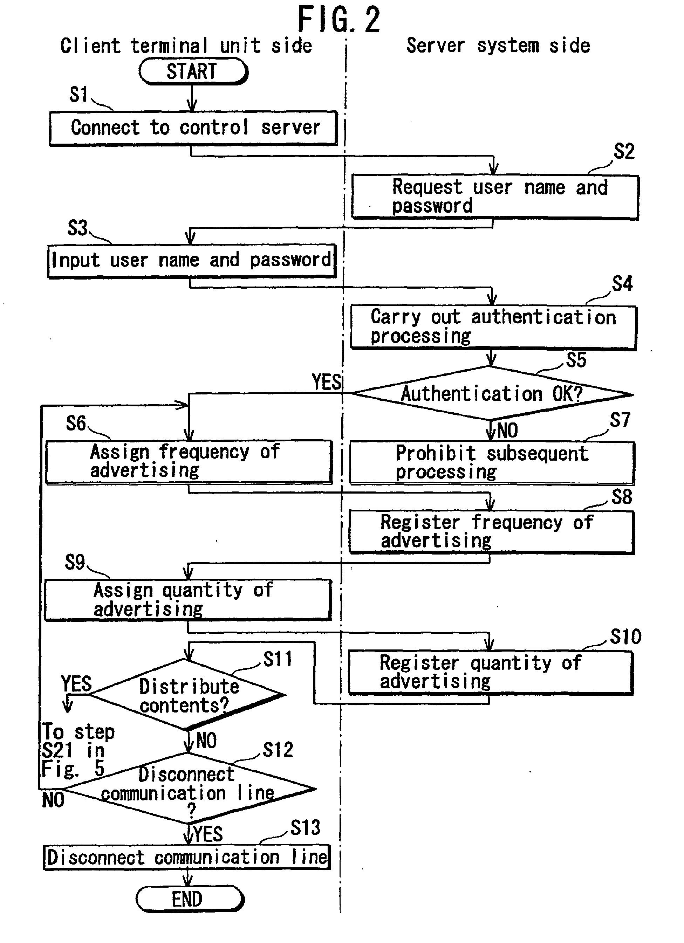

A flowchart in Fig. 2 shows a flow of operation that the viewer registers the frequency and the quantity of advertising that the viewer wants, to the broadcasting station. In the flowchart shown in Fig. 2, steps S1, S3, S6, S9, and S11 to S13 show the operation of the viewer at the client terminal unit 2 side, and steps S2, S4, S5, S7, S8, and S10 show the operation of the broadcasting station at the server system 3 side.

According to this contents distribution system, first, the viewer who is going to receive the distribution of desired contents from the broadcasting station selects the frequency and the quantity of advertising to be inserted into the contents.

Namely, when the viewer is about to receive the distribution of desired contents from the broadcasting station, the viewer turns on the main power source of the own client terminal unit 2. When the main power source of this client terminal unit 2 is turned on, the flowchart shown in Fig. 2 starts, and the process proceeds to step S1.

At step S1, the viewer starts the Web browser of the client terminal unit 2, and operates the input section 22 to try to connect the client terminal unit 2 to the server system 3 at the broadcasting station side. As a result, the client terminal unit 2 is connected to the server system 3 via the network 1, and the processing routine of this flowchart proceeds to step S2.

At step S2, the controller 36 of the server system 3 requests the client terminal unit 2 that has established the connection to the server system 3, to input a user name and a password. Then, the processing routine of this flowchart proceeds to step S3.

At step S3, the viewer at the client terminal unit 2 side operates the input section 22 to input the user name and the password allocated to each user. When the user name and the password are input, the client terminal unit 2 transmits the user name and the password to the server system 3. Then, the processing routine of this flowchart proceeds to step S4.

At step S4, the controller 36 of the server system 3 collates the user name and the password input by this viewer with a user name and a password stored in the user information database 39, and proceeds to step S5. At step S5, the system server 3 carries out the authentication processing for making a decision about whether the viewer who wants the distribution of the contents at present is a proper member of this system or not.

When a decision is made that the viewer who wants the distribution of the contents at present is a proper member of this system (in the case of Yes), the controller 36 requests the viewer to assign the frequency and the quantity of advertising. When a decision is made that the viewer who wants the distribution of the contents at present is not a proper member of this system (in the case of No), at step S7, the controller 36 transmits an error message of "The input user name or password is not correct", for example, to the client terminal unit 2, and prohibits the execution of subsequent processing.

Next, at step S6 and step S9, the viewer operates the input section 22 of the client terminal unit 2 to assign the frequency and the quantity of advertising to be added to the contents of which distribution the viewer wants. When the viewer has assigned the frequency and the quantity of advertising, the client terminal unit 2 transmits the information on the assigned frequency and quantity of advertising to the server system 3.

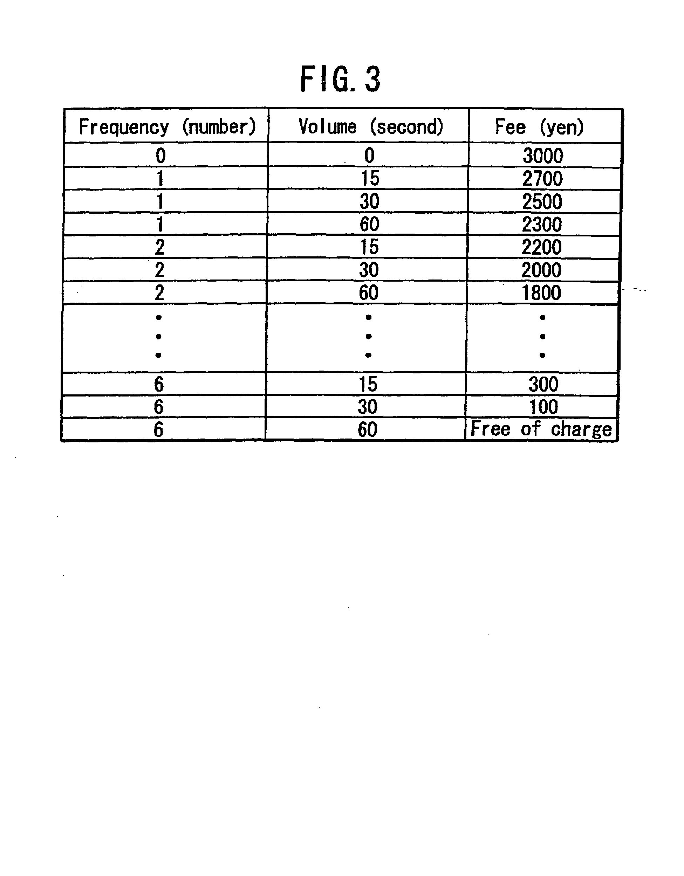

Fig. 3 is a diagram showing a charged fee of contents corresponding to the frequency and the quantity of advertising assigned by the user. In the example shown in Fig. 3, regarding the frequency of advertising, a desired level of frequency is selected from among 0 time to 6 times per contents. Regarding the quantity of advertising, a desired quantity is selected from among 15 seconds, 30 seconds, and 60 seconds per time.

When the frequency of advertising has been assigned to 0 (zero) time (= no advertising. In this case, the quantity is zero second), for example, the user must bear the total amount of the viewing fee of the contents. Therefore, the viewing fee is a maximum amount of 3,000 yen, for example. When the viewer has assigned the frequency of advertising to one time, and has also assigned the advertising time to 15 seconds per time, the viewing fee is discounted to 2,700 yen by deducting 300 yen that corresponds to the adverting time of 15 seconds from the maximum amount. Similarly, when the viewer has assigned the frequency of advertising to two times, and has also assigned the advertising time to 60 seconds per time, the viewing fee is discounted to 1,800 yen by deducting 1,200 yen that corresponds to the adverting time of 60 seconds x two times from the maximum amount. Further, when the viewer has assigned the frequency of advertising to six times, and has also assigned the advertising time to 60 seconds per time, the viewing fee becomes zero yen (free of charge) as a result of deducting 3,000 yen that corresponds to the adverting time of 60 seconds x six times from the maximum amount.

As explained above, according to the contents distribution system of this embodiment, viewing fees of the contents have been determined at stages corresponding to the frequency and the quantity of advertising to be selected by the viewer. Therefore, the viewer selects the desired frequency and quantity of advertising by referring to these viewing fees.

Next, when the desired frequency and quantity of advertising have been selected by the user, the controller 36 at the server side stores the frequency and the quantity of advertising selected by the user, into the user information database 39, at step S8 and step S10.

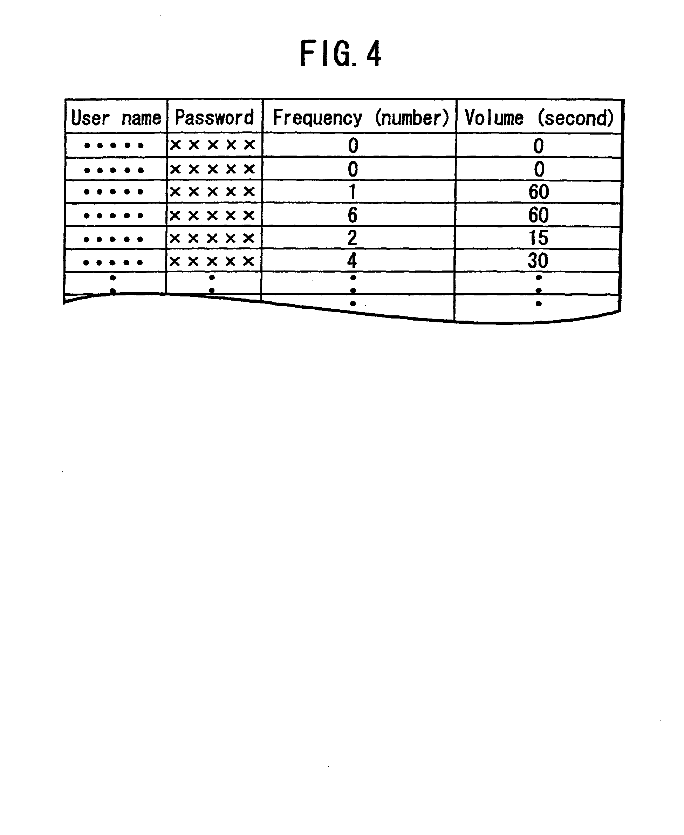

Fig. 4 is a diagram showing one example of information on the frequency and the quantity of adverting stored for each user in the user information database 39. As understood from Fig. 4, the user information database 39 stores the information on the frequency and the quantity of adverting selected by each user, such as the frequency of advertising zero time and the quantity zero second, or the frequency of advertising one time and the quantity 60 seconds, for example, together with the user name and the password of each user. The information that shows the frequency and the quantity of advertising for each user stored and controlled in the user information database 39 is read by the controller 36 at the time of distributing advertising. Then, the controller 36 transmits the advertising information to the client terminal unit 2 of each user, based on the frequency and the quantity of adverting selected by each user.

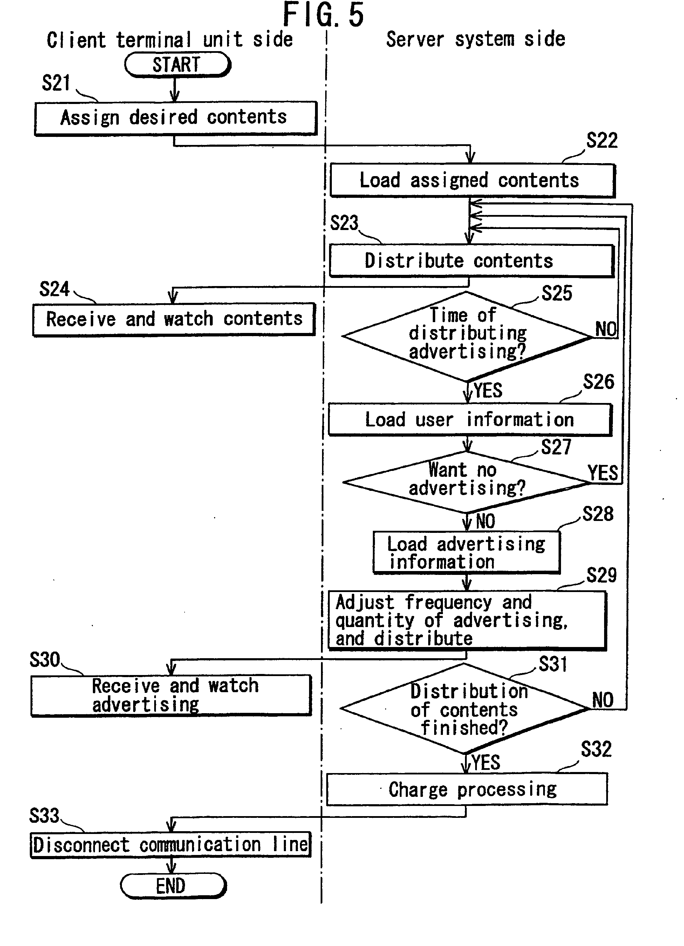

Next, when the frequency and the quantity of adverting have been assigned, the communications controller 23 at the client terminal unit 2 side displays on the display unit 21 a message of asking whether the distribution of the contents is to be started or not such as "Do you want the distribution of the contents to be started?", for example. Then, at step S11, the server system 3 decides whether the distribution of the contents has been assigned from the user or not. When the distribution of the contents has been assigned from the user, the operation shifts to the flowchart in Fig. 5 that shows the distribution of the contents and the advertising information. When the distribution of the contents has not been assigned from the user, the process proceeds to step S12.

At step S12, the communications controller 23 at the client terminal unit 2 side displays on the display unit 21 a message of asking whether the connection status of the communication line between the client terminal unit 2 and the server system 3 is to be maintained or not such as "Do you want the connection line to be disconnected?", for example. When the connection is not to be disconnected, the server system 3 considers that there is a correction in the assignment of the frequency and the quantity of advertising, then returns to step S6. Then, each routine at step S6 to step S11 is executed repeatedly.

On the other hand, when the user has assigned the disconnection of the communication line, the communication controller 23 disconnects the communication line between the client terminal unit 2 and the server system 3 at step S13. As a result, all the routines of the flowchart shown in Fig. 2 are finished.

### Distribution of Contents and Advertising

Next, when the user has assigned the distribution of the contents at step S11 in the flowchart shown in Fig. 2, the operation of the system shifts to the operation of the flowchart shown in Fig. 5 that shows the flow of the distribution of the contents and advertising.

In the flowchart shown in Fig. 5, when the user has assigned desired contents, the client terminal unit 2 transmits information showing the contents assigned by the user to the server system 3 at step S21.

At the server system 3 side, the controller 36 loads the contents assigned by the user from the contents server 38 at step S22. At step S23, the server system 3 distributes the contents to the client terminal unit 2 via the switcher 33 and the gateway 32. Based on this, at the client terminal unit 2 side, it becomes possible to watch the desired contents as shown at step S24.

Next, the server system 3 monitors the time of distributing the advertising by timing with the timer 40 while distributing the contents. At step S25, the controller 36 makes a decision about whether the current time has reached the time of distributing the advertising or not, based on the time counted with the timer 40. When the current time has not reached the time of distributing the advertising, the process returns to step S23, and the controller 36 continues to control the distribution of the contents. When the current time has reached the time of distributing the advertising, the process proceeds to step S26.

At step S26, as the current time has reached the time of distributing the advertising, the controller 36 loads the user information of the user to whom the contents are being distributed, from the user information database 39. With this arrangement, the controller 36 detects the frequency and the quantity of advertising assigned by the user.

At step S27, the controller 36 makes a decision about whether the user wants non-distribution of the advertising information (no advertising) or not, based on the loaded user information. When the user wants no advertising, the process returns to step S23, and the controller 36 continues to control the distribution of the contents. With this arrangement, the user can watch the contents continuously without being interrupted by advertising, as desired.

Next, when the user has permitted the distribution of the advertising information, at step S28, the controller 36 reads the predetermined advertising information from the advertising server 37, and loads this advertising information to the advertising transmission frequency adjuster 35 and the advertising transmission quantity adjuster 34 respectively.

At step S29, the controller 36 controls the advertising transmission frequency adjuster 35 and the advertising transmission quantity adjuster 34 to form the advertising information of the frequency and the quantity assigned in advance by the user. Then, the controller 36 interrupts the transmission of the contents from the contents server 38, and controls the change-over of the switcher 33 to distribute the advertising information adjusted by the advertising transmission frequency adjuster 35 and the advertising transmission quantity adjuster 34. This advertising information is transmitted to the client terminal unit 2 via the gateway 32. As a result, the user watches the advertising information of the frequency and the quantity assigned by the user himself or herself (step S30).

The controller 36 controls the change-over of the switcher 33 to re-start the distribution of the contents so far interrupted, after the distribution of this advertising information. As a result, the user can watch the rest of the contents continuously after watching the advertising.

Next, at step S31, the controller 36 makes a decision about whether the distribution of the contents has been finished or not. When the distribution of the contents has not yet been finished, the process returns to step S23, and the controller 36 continues to control the distribution of the contents. When the distribution of the contents has been finished, the process proceeds to step S32, and the controller 36 charges the user for the viewing fee of the contents.

As described with reference to the example shown in Fig. 3, the viewing fees of the contents are decided at stages based on the frequency and the quantity of advertising. Therefore, at step S32, the controller 36 charges the user for the viewing fee corresponding to the frequency and the quantity of advertising selected by the user from among the frequencies and quantity of advertising determined at stages.

Next, when the user has finished the watching of the contents, the user disconnects the communication line connected between the client terminal unit 2 and the server system 3, at step S33. As a result, all the routines of the flowchart shown in Fig. 5 are finished.

As is apparent from the above explanation, the contents distribution system of this embodiment makes the user select in advance the frequency and the quantity (or the frequency or the quantity) of advertising to be added to the contents. Then, the contents distribution system charges the user for the viewing fee corresponding to the frequency and the quantity of advertising selected by the user. With this arrangement, it is possible to distribute the contents in the form of the viewing fee and the advertising quantity desired by the user.

In the above explanation of the embodiment, the advertising information of the frequency and the quantity selected in advance by the user is inserted. However, it is also possible to change the frequency and the quantity of adverting in the middle of the distribution of the contents. In this case, the user operates the input section 22 of the client terminal unit 2 to assign the change in the frequency and the quantity of advertising. Then, the server system 3 distributes the advertising information of the frequency and the quantity that have been changed, and charges the user for the viewing fee corresponding to the frequency and the quantity of advertising changed by the user.

Further, the above embodiment shows an example of the case where the present invention is applied to the contents distribution system that distributes the contents via the communication line. It is also possible to apply the present invention to a connection service like the toll broadcasting using the ground wave or the satellite wave and the Internet. When the present invention is applied to the connection service like the Internet, the user is made to select the frequency and the quantity of banner advertising that is displayed on the display screen, and the user is charged for the connection fee corresponding to the frequency and the quantity of advertising selected by the user.

The present invention may be applied to an object distribution system. In the case of the object distribution system, an object is wrapped with a wrapping paper and distributed. Therefore, the user is charged for a distribution fee corresponding to the position and quantity of advertising attached to the wrapping paper.

The above-described embodiment is one example of the present invention. Therefore, it should be noted that the present invention is not limited to the above embodiment, and it is of course possible to carry out various modifications according to designs or the like within the range not deviating from the technical idea of the present invention.

### INDUSTRIAL APPLICABILITY

The present invention can be applied to a toll broadcasting services of television broadcasting like ground wave broadcasting, satellite broadcasting, and cable televisions, connection services and contents distribution services for a communication line network like Internet, and product distribution services.

## Claims

1. A method of providing services, comprising the steps of:
making service beneficiaries select at least either the frequency or the quantity of advertising to be added to the services provided; and
setting a fee for the provision of services to the service beneficiaries, according to at least either the frequency or the quantity of advertising selected.

2. The method of providing services according to Claim 1, wherein
the fees including free of charge for the services to be provided to the service beneficiaries are set at stages, according to at least either the frequency or the quantity of advertising selected.

3. The method of providing services according to Claim 1 or 2, wherein
at least either the frequency or the quantity of advertising selected can be changed during the provision of the services.

4. A computer-readable recording medium having recorded therein a service-providing program to be executed by a computer, wherein the service-providing program comprising the steps of:
making service beneficiaries select at least either the frequency or the quantity of advertising to be added to the services provided; and
setting a fee for the provision of services to the service beneficiaries, according to at least either the frequency or the quantity of advertising selected.

5. The computer-readable recording medium having recorded therein a service-providing program according to Claim 4, wherein
the fees including free of charge for the services to be provided to the service beneficiaries are set at stages, according to at least either the frequency or the quantity of advertising selected.

6. The computer-readable recording medium having recorded therein a service-providing program according to Claim 4 or 5, wherein
at least either the frequency or the quantity of advertising selected can be changed during the provision of the services.

7. A program-executing apparatus for executing a computer program, wherein the computer program comprising the steps of:
making service beneficiaries select at least either the frequency or the quantity of advertising to be added to the services provided; and
setting a fee for the provision of services to the service beneficiaries, according to at least either the frequency or the quantity of advertising selected.

8. The program-executing apparatus for executing a computer program according to Claim 7, wherein
the fees including free of charge for the services to be provided to the service beneficiaries are set at stages, according to at least either the frequency or the quantity of advertising selected.

9. The program-executing apparatus for executing a computer program according to Claim 7 or 8, wherein
at least either the frequency or the quantity of advertising selected can be changed during the provision of the services.

10. A contents distribution system, comprising:
a client terminal unit connected to a predetermined network, and having selecting means for selecting at least either the frequency or the quantity of advertising to be added to the contents to be distributed; and
a distribution unit having distribution means for distributing the contents added with the advertising corresponding to at least either the frequency or the quantity selected by the selecting means of the client terminal unit, to the client terminal unit via the predetermined network, and charging means for charging a fee for the contents distributed to the client terminal unit, according to at least either the frequency or the quantity of advertising selected by the selecting means of the client terminal unit.

11. The contents distribution system according to Claim 10, wherein
the charging means sets the fees including free of charge at stages for the services to be provided, according to at least either the frequency or the quantity of advertising selected by the selecting means of the client terminal unit.

12. The contents distribution system according to Claim 10 or 11, wherein
the client terminal unit has changing means for assigning a change in at least either the frequency or the quantity of advertising during the reception of the contents, and
the distribution means of the distribution unit adds the advertising according to at least either the frequency or the quantity changed by the changing means of the client terminal unit, and distributes the contents added with the advertising to the client terminal unit.

13. A computer-readable recording medium having recorded therein a contents distribution program to be executed by a computer, wherein the contents distribution program comprising the steps of:
making a client terminal unit connected to a predetermined network select at least either the frequency or the quantity of advertising to be added to the contents to be distributed;
making a distribution unit connected to the predetermined network add the advertising corresponding to at least either the frequency or the quantity selected by the client terminal unit to the contents, and distribute the contents added with the advertising to the client terminal unit; and
making the distribution unit charge a fee for the contents distributed to the client terminal unit, according to at least either the frequency or the quantity of advertising selected by the client terminal unit.

14. The computer-readable recording medium having recorded therein a contents distribution program to be executed by a computer according to Claim 13, wherein the contents distribution program further comprising the step of:
making the distribution unit set fees including free of charge for the contents at stages, according to at least either the frequency or the quantity of advertising selected by the client terminal unit.

15. The computer-readable recording medium having recorded therein a contents distribution program to be executed by a computer according to Claim 13 or 14, wherein the contents distribution program further comprising the steps of:
specifying a change in at least either the frequency or the quantity of advertising at the client terminal unit side during the reception of the contents, and
making the distribution unit add the advertising according to at least either the frequency or the quantity changed by the client terminal unit, and distribute the contents added with the advertising to the client terminal unit.

16. A service-providing program to be executed by a computer, comprising the steps of:
making service beneficiaries select at least either the frequency or the quantity of advertising to be added to the services provided; and
setting a fee for the provision of services to the service beneficiaries, according to at least either the frequency or the quantity of advertising selected.

17. A contents distribution program to be executed by a computer, comprising the steps of:
making a client terminal unit connected to a predetermined network select at least either the frequency or the quantity of advertising to be added to the contents to be distributed;
making a distribution unit connected to the predetermined network add the advertising corresponding to at least either the frequency or the quantity selected by the client terminal unit to the contents, and distribute the contents added with the advertising to the client terminal unit; and
making the distribution unit charge a fee for the contents distributed to the client terminal unit, according to at least either the frequency or the quantity of advertising selected by the client terminal unit.

## Amended claims

### Amended claims under Art. 19.1 PCT

**1.** (Amended) A method of providing services, comprising the steps of:
storing at least either frequency information or quantity information selected by service beneficiaries into storage means, the frequency and quantity information showing frequency and quantity of advertising added to the service provided for the service beneficiaries respectively;
providing the service beneficiaries with the service including the advertising according to at least either the frequency information or the quantity information; and
performing charging process on the service beneficiaries according to at least either the frequency information or the quantity information.

**2.** (Amended) The method according to Claim **1**, wherein the charging process is performed in stages including free of charge according to at least either the frequency information or the quantity information.

**3.** (Amended) The method according to Claim **1** or **2**, further comprising the steps of:
receiving change request for at least either the frequency information or the quantity information during the provision of the service; and
changing at least either the frequency information or the quantity information according to the change request,
wherein the charging process for the provided services is performed according to at least either the changed frequency information or the changed quantity information.

**4.** (Added) The method according to Claim **1**, **2**, or **3**, further comprising the steps of:
detecting timing for providing the advertising according to at least either the frequency information or the quantity information; and
providing the advertising by interrupting the provision of the service upon detecting the timing for providing the advertising.

**5.** (Added) The method according to Claim **1**, **2**, **3** or **4**, wherein the service is contents distribution via a predetermined network.

**6.** (Amended) Acomputer-readable recording medium having recorded therein a service-providing program to be executed by a computer, wherein the service-providing program comprises the steps of:
storing at least either frequency information or quantity information selected by service beneficiaries into storage means, the frequency and quantity information showing frequency and quantity of advertising added to the service provided for the service beneficiaries respectively;
providing the service beneficiaries with the service including the advertising according to at least either the frequency information or the quantity information; and
performing charging process on the service beneficiaries according to at least either the frequency information or the quantity information.

**7.** (Amended) The computer-readable recording medium according to Claim **6**, wherein the charging process is performed in stages including free of charge according to at least either the frequency information or the quantity information.

**8.** (Amended) The computer-readable recording medium according to Claim **6** or **7**, wherein
the service-providing program further comprises the steps of: receiving change request for at least either the frequency information or the quantity information during the provision of the service; and changing at least either the frequency information or the quantity information according to the change request, and
the charging process for the provided services is performed according to at least either the changed frequency information or the changed quantity information.

**9.** (Added) The computer-readable recording medium according to Claim **6**, **7**, or **8**, wherein the service-providing program further comprises the steps of:
detecting timing for providing the advertising according to at least either the frequency information or the quantity information; and
providing the advertising by interrupting the provision of the service upon detecting the timing for providing the advertising.

**10.** (Added) The computer-readable recording medium according to Claim **6, 7, 8**, or **9**, wherein the service is contents distribution via a predetermined network.

**11.** (Amended) A distribution apparatus comprising:
storage means for storing at least either frequency information or quantity information selected thorough a client terminal device of service beneficiaries, the frequency and quantity information showing frequency and quantity of advertising added to services provided for the service beneficiaries respectively;
distributing means for distributing advertising contents together with predetermined contents to the client terminal device via a predetermined network according to at least either the frequency information or the quantity information,; and
charging means for performing charging process for the distributed contents according to at least either the frequency information or the quantity information.

**12.** (Amended) The distribution apparatus according to Claim **11**, wherein the charging means performs the charging process in stages including free of charge according to at least either the frequency information or the quantity information.

**13.** (Amended) The distribution apparatus according to Claim **11** or **12**, further comprising:
receiving means for receiving change request for at least either the frequency information or the quantity information, the change request being made through the client terminal device; and
changing means for changing at least either the frequency information or the quantity information according to the change request,
wherein the charging means performs the charging process for the provided services according to at least either the changed frequency information or the changed quantity information.

**14.** (Added) The distribution apparatus according to Claim **11**, **12**, or **13**, further comprising:
timing detecting means for detecting timing for providing the advertising according to at least either the frequency information or the quantity information,
wherein the distributing means distributes the advertising contents by interrupting the distribution of the contents upon detecting the timing for providing the advertising.

**15.** (Amended) A contents distribution system comprising:
client terminal device connected to a predetermined network and comprising selecting means for selecting at least either frequency or quantity of advertising to be added to contents to be distributed; and
distribution apparatus comprising distributing means for distributing contents added with advertising according to at least either the frequency or quantity selected by the selecting means to the client terminal device via the predetermined network; and charging means for performing charging process for contents distributed to the client terminal device according to the at least either the frequency or quantity of the advertising selected by the selecting means.

**16.** (Amended) A service-providing program to be executed by a computer, comprising the steps of:
storing at least either frequency information or quantity information selected by service beneficiaries into storage means, the frequency and quantity information showing frequency and quantity of advertising added to the service provided for the service beneficiaries respectively;
providing the service beneficiaries with the service including the advertising according to at least either the frequency information or the quantity information; and
performing charging process on the service beneficiaries according to at least either the frequency information or the quantity information.

**17.** . (deleted)

Statement under Art. 19.1 PCT

**1.** has been amended to make it clear that a method of providing services according to the present invention comprises the steps of: storing into a storage means frequency information that shows frequency of advertising and/or quantity information that shows quantity of the advertising, selected by service beneficiaries; providing the service beneficiaries with the advertising whose frequency and/or quantity corresponds to the frequency and/or quantity information; and performing charging process on the service beneficiaries according to the frequency and/or quantity of provided advertising.
**2.** has been amended to make it clear that the charging fee imposed on the service beneficiaries are set in stages including free of charge according to at least the frequency and/or quantity of provided advertising.
**3.** has been amended to make it clear that the frequency and quantity information of advertising can be changed during the provision of the service.
**4.** is added and shows that the advertising is provided by interrupting the service. This addition is made based on the explanation of step S29 at page 12, lines 19-24 of the application.
**5.** is added and shows that the service provided for the service beneficiaries is contents distribution. This addition is made based on the explanation of the contents distribution system, which is the embodiment of the present invention, described in the application.
**6.** has been amended to make it clear that claim 6 is concerned to a computer readable recording medium having recorded therein a service-providing program, wherein the service-providing program comprises the steps of: storing into a storage means frequency information that shows frequency of advertising and/or quantity information that shows quantity of the advertising, selected by service beneficiaries; providing the service beneficiaries with the advertising whose frequency and/or quantity corresponds to the frequency and/or quantity information; and performing charging process on the service beneficiaries according the frequency and/or quantity of provided advertising.
**7.** has been amended to make it clear that claim 7 is concerned to a computer readable recording medium having recorded therein a service-providing program, wherein the service providing program comprises the step of: performing charging process in which the charging fee imposed on the service beneficiaries are set in stages including free of charge according to at least the frequency and/or quantity of provided advertising.
**8.** has been amended to make it clear that claim 8 is concerned to a computer readable recording medium having recorded therein a service-providing program, wherein the service providing program can change the frequency and quantity information of advertising during the provision of the service.
**9.** is added and is concerned to a computer readable recording medium having recorded therein a service-providing program, wherein the service providing program comprises the step of: providing the advertising by interrupting the service when the timing for providing advertising has come. This addition is based on the explanation of step S29, at page 12, lines 19-24 of the application.
**10.** is added and is concerned to a computer readable recording medium having recorded therein a service-providing program, wherein the service providing program comprises the steps of: performing contents distribution service for the service beneficiaries. This addition is made based on the explanation of the contents distribution system, which is the embodiment of the present invention, described in the application.
**11.** has been amended to make it clear that a distribution apparatus according to the present invention stores into a storage means frequency information that shows frequency of advertising and/or quantity information that shows quantity of the advertising, selected by service beneficiaries; provides the service beneficiaries with the advertising whose frequency and/or quantity corresponds to the frequency and/or quantity information; and performs charging process on the service beneficiaries according to the frequency and/or quantity of provided advertising.
**12.** has been amended to make it clear that a distribution apparatus according to the present invention performs charging process which the charging fee imposed on the service beneficiaries are set in stages including free of charge according to at least the frequency and/or quantity of provided advertising.
**13.** has been amended to make it clear that a distribution apparatus according to the present invention can change the frequency and quantity information of advertising during the provision of the service.
**14.** is added and shows that a distribution apparatus according to the present invention provides the advertising by interrupting the service when the timing for providing advertising has come. This addition is based on the explanation of step S29, at page 12, lines 19-24 of the application.
**15.** has been amended to make it clear that the service provided for the service beneficiaries is contents distribution.
**16.** has been amended to make it clear that a service-providing program according to the present invention stores into a storage means frequency information that shows frequency of advertising and/or quantity information that shows quantity of the advertising, selected by service beneficiaries; provides the service beneficiaries with the advertising whose frequency and/or quantity corresponds to the frequency and/or quantity information; and performs charging process on the service beneficiaries according to the frequency and/or quantity of provided advertising.
**17.** is cancelled.
